# FASCICULE DE BREVET EUROPEEN

(11) **EP 1 978 853 B1**
(45) Date de publication et mention de la délivrance du brevet: **04.05.2011**
(21) Numéro de dépôt: 07731542.2
(22) Date de dépôt: 31.01.2007
(51) Int. Cl.: A47J 31/40

(54) **APPAREIL DESTINÉ A CONFECTIONNER UNE INFUSION DE CAFÉ OU THÉ**
GERÄT ZUM BRÜHEN VON KAFFEE ODER TEE
APPLIANCE FOR BREWING COFFEE OR TEA

(30) Priorité: 01.02.2006 FR 0600910
(43) Date de publication de la demande: 15.10.2008
(73) Titulaire: Handpresso, 77300 Fontainebleau (FR)
(72) Inventeur: NIELSEN, Henrik, 77300 Fontainebleau (FR); CHATEAU, Patrick, 94250 Gentilly (FR); PETITDEMANGE, David, 77000 Vaux le Pénil (FR); CORBIER, Aurélien, 59000 Lille (FR)
(74) Mandataire: Cardy, Sophie Marie
(86) Numéro de dépôt international: PCT/FR2007/050714
(87) Numéro de publication internationale: WO 2007/088309

(56) Documents cités:
- WO-A-2005/115206
- DE-A1- 3 422 432
- DE-A1- 10 125 245
- DE-A1- 19 848 370
- US-A- 5 622 099
- US-A1- 2002 002 913

## Description

L'invention, se rapporte à un appareil destiné à confectionner une infusion à partir d'une charge de produit à infuser, comme du café ou thé en poudre ou en dosette et comprenant un réservoir d'eau, un boîtier comportant une chambre présentant une buse d'amenée d'eau chaude ainsi qu'une ouverture par laquelle est susceptible d'être introduite une charge de produit à infuser, des moyens reliés au réservoir pour délivrer lors d'un cycle d'infusion, un certain volume d'eau, amené à une température d'infusion dudit réservoir à ladite chambre, et un orifice d'écoulement de l'infusion. Ici, le terme infusion doit naturellement être pris au sens large, pour désigner toute infusion, thé, café ou autre préparation de même type.

L'invention concerne, plus précisément mais non exclusivement, un appareil comprenant en outre une pièce de fermeture de ladite chambre montée mobile par rapport à ladite chambre et pouvant occuper deux positions ouverte ou fermée correspondant respectivement au chargement - déchargement de la dite chambre et à la préparation de l'infusion.

Les appareils existants de ce type, par exemple comme décrit comme dans le brevet DE 3422432, possèdent un boîtier de volume important imposé principalement par un réservoir de grande capacité afin d'effectuer plusieurs cycles d'infusion successifs , et par un moyen de chauffage rapide à haute inertie thermique afin de pouvoir délivrer un certain volume d'eau à la bonne température d'infusion pour au moins une à dix tasses en continu.

En outre, ces appareils à pièce de fermeture mobile exigent un boîtier avec un socle de grande surface pour obtenir une bonne stabilité lors des phases de mise en position fermée ou en position ouverte.

D'autre part, avec de tels appareils, l'utilisateur peut difficilement envisager d'effectuer une infusion en dehors de son domicile, par exemple en camping ou en son véhicule ,du fait, non seulement, de l'encombrement et du poids de l'appareil, mais aussi ,de son branchement sur le réseau électrique pour alimenter le moyen de pompage et amener l'eau à une température idéale pour confectionner l'infusion.

Néanmoins, pour palier ces inconvénients, on a réalisé des appareils pour véhicules tels que décrits par exemple dans la demande de brevet EP-A 1277428, mais ces appareils restent, malgré leurs dimensions adaptées, de conception classique avec pratiquement les mêmes composants internes encombrants et coûteux.

Un autre appareil est divulgué par le document DE 3422432.

En outre, dans le cas où l'on souhaite préparer et offrir une infusion de café, par exemple, dans une pièce dédiée aux réunions, les appareils connus sont difficilement maniables, restent lourds, encombrants et bruyants.

L'invention a donc pour but de pallier les inconvénients de l'art antérieur en réalisant un appareil de conception très simplifiée,du type portatif, et procurant une grande commodité et sécurité d'utilisation.

Ce but est atteint grâce au fait que l'appareil consiste essentiellement en une structure portative comprenant une tête renfermant au moins la chambre, un corps comportant au moins un moyen de préhension permettant de placer, lors du cycle d'infusion, l'orifice d'écoulement de la pièce de fermeture vers le bas en direction d'une tasse de collecte de l'infusion.

L'appareil peut comporter en outre un mécanisme de commande permettant de placer la pièce de fermeture en ses positions ouverte ou fermée. La buse d'amenée d'eau chaude peut être située dans le fond de la chambre. Le réservoir peut par exemple faire partie de ladite tête, ou encore dudit corps.

Avantageusement, lesdits moyens reliés au réservoir pour délivrer lors d'un cycle d'infusion, un certain volume d'eau, amené à une température d'infusion dudit réservoir à ladite chambre, peuvent comporter des moyens de pressurisation, pour fournir l'eau dans la chambre à une pression déterminée.

Avantageusement, lesdits moyens de pressurisation sont un moyen de pompage, pouvant comporter une pompe à air électrique établissant une pression d'air au dessus de l'eau dans le réservoir, ou encore une pompe à eau interposée entre le réservoir et la chambre.

Avantageusement, le réservoir d'eau est équipé en outre d'une valve de sécurité destinée à mettre à l'air libre ledit réservoir et pouvant occuper, soit un état libre en laquelle elle permet de mettre le réservoir à l'air libre, soit un état de fermeture sous contrainte dans lequel elle n'autorise pas la mise à l'air libre, sauf en cas de surpression anormale.

Avantageusement, la pièce de fermeture est montée amovible sur le boîtier et comporte avec le boîtier des moyens d'enclenchement mutuel.

Avantageusement, l'appareil comporte au moins un accumulateur ou pile électrique pour l'alimentation desdits moyens de pressurisation, et qui peut être par exemple agencé dans ledit moyen de préhension.

Ainsi, grâce à la structure portative renfermant les éléments techniques essentiels nécessaires à la confection d'une infusion, l'utilisateur, saisit l'appareil d'une main et peut ainsi agir directement sur le mécanisme de commande, ce qui nécessite aucune expertise dans la mise en oeuvre de cet appareil .En outre, du fait de cette construction extrêmement dépouillée, légère et ergonomique ,l'appareil procure une grande autonomie d'utilisation en tous lieux. De plus cet appareil baladeur peut ainsi être branché sur toute source de courant ,réseau ou batterie ,pour alimenter le moyen de pompage et un moyen de chauffage de l'eau.

Selon une autre caractéristique importante de l'invention et afin de rendre autonome l'appareil, le réservoir d'eau est isolé thermiquement de manière à recevoir et à conserver l'eau chaude qui lui est amenée de l'extérieure à une température idoine de confection de l'infusion.

Ainsi, grâce à l'absence d'un moyen de chauffage interne spécifique au réservoir d'eau, on comprendra que l'appareil n'a pas besoin d'une connexion électrique sur une source d'énergie conséquente, mais peut utiliser seulement une plus faible énergie électrique pour faire fonctionner uniquement le moyen de pompage ; voire même utiliser un autre moyen de pompage non électrique .Cette construction procure ainsi une autonomie non négligeable rendant conviviale l'utilisation de cet appareil.

L'invention vise également un procédé de préparation d'infusion au moyen d'un appareil du type décrit ci-dessus et dans lequel :
on ouvre la chambre en agissant sur la pièce de fermeture et on amène la chambre à avoir son ouverture tournée vers le haut, ou encore en partant de la position ouverte de la pièce de fermeture ,on saisit d'une main le moyen de préhension pour amener la chambre avec son ouverture tournée vers le haut ;
on remplit le réservoir d'eau préalablement chauffée habituellement entre 80° et 100°C;
on introduit dans la chambre d'infusion une charge de produit à infuser en poudre ou en dosette ;
on referme de façon étanche la chambre avec la pièce de fermeture ;
on place l'orifice d'écoulement vers le bas au-dessus d'une tasse en retournant l'appareil par son moyen de préhension ;
on actionne lesdits moyens reliés au réservoir pour délivrer un certain volume d'eau, amené à une température d'infusion dudit réservoir à ladite chambre, ce qui entraine la confection de l'infusion, qui s'écoule à travers l'orifice d'écoulement de la pièce de fermeture vers le bas en direction de ladite tasse ;
dès que la tasse est remplie,
on interrompt lesdits moyens reliés au réservoir pour délivrer un certain volume d'eau ; et
on ouvre la chambre en agissant sur la pièce de fermeture afin de retirer la charge usagée.

Plus précisément, pour refermer de façon étanche la chambre avec la pièce de fermeture , on actionne un mécanisme de commande qui comprend un organe de manoeuvre qui met en oeuvre une tringlerie pour amener de façon étanche ladite pièce de fermeture contre l'ouverture.

D'autre part, pour actionner lesdits moyens reliés au réservoir pour délivrer un certain volume d'eau, on presse l'organe de manoeuvre vers le corps pour enclencher, d'une part, d'abord la mise sous contrainte d'une valve d'un dispositif de sécurité, et d'autre part, ensuite un interrupteur de commande du moyen de pompage qui permet la pressurisation du réservoir et l'envoi de l'eau chaude sous pression dans la chambre pour confectionner l'infusion.

De plus, pour interrompre lesdits moyens reliés au réservoir pour délivrer un certain volume d'eau, on relâche l'organe de manoeuvre ce qui provoque d'abord le déclenchement de l'ouverture de l'interrupteur et donc l'arrêt du moyen de pompage ; et qui ensuite provoque la relâche de la valve et la mise à l'air libre du réservoir.

Enfin, pour ouvrir la chambre en agissant sur la pièce de fermeture, afin de retirer la charge usagée, on continue la course inverse de l'organe de manoeuvre vers l'extérieur pour procéder au basculement de la pièce de fermeture et à l'ouverture de la chambre.

Les caractéristiques et avantages de l'invention ressortiront d'ailleurs de la description qui va suivre, prise à titre d'exemple non limitatif, en référence aux dessins annexés dans lesquels :
La figure 1 est une vue en perspective, avec arrachement d'une partie du boîtier, d'un appareil selon l'invention et dont une pièce de fermeture est en position ouverte;
La figure 2 est une vue similaire à la figure 1, mais avec la pièce de fermeture en position fermée ;
La figure 3 représente l'appareil de la figure 1 mais en position retournée avec la pièce de fermeture ouverte;
La figure 4 est une vue à échelle agrandie d'une section verticale simplifiée de l'appareil selon la ligne 1-1 de la figure 2 ;

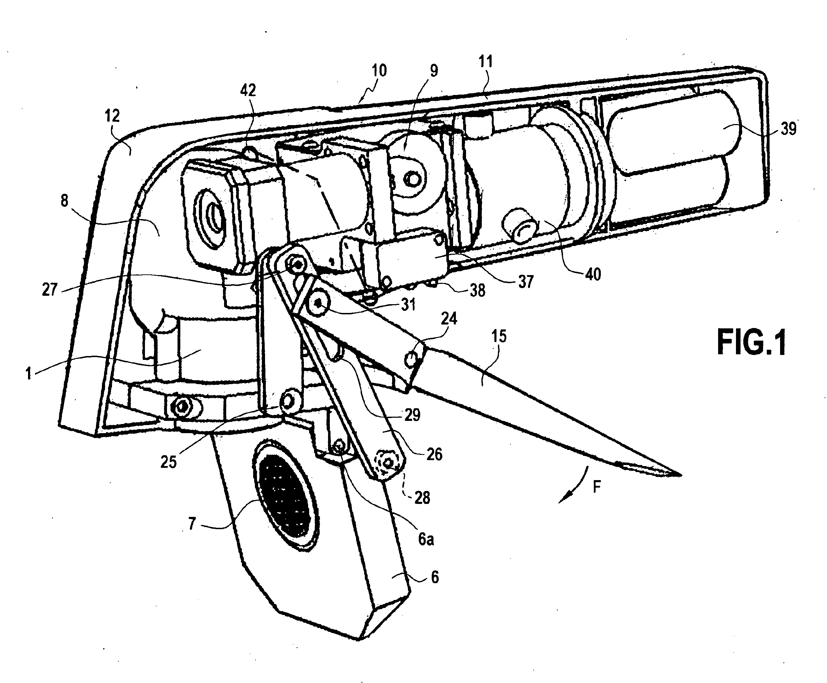

A la figure 1, on a représenté un appareil destiné à confectionner une infusion à partir d'une charge de café ou thé présentée en poudre ou en dosette à corps textile ou métallique.

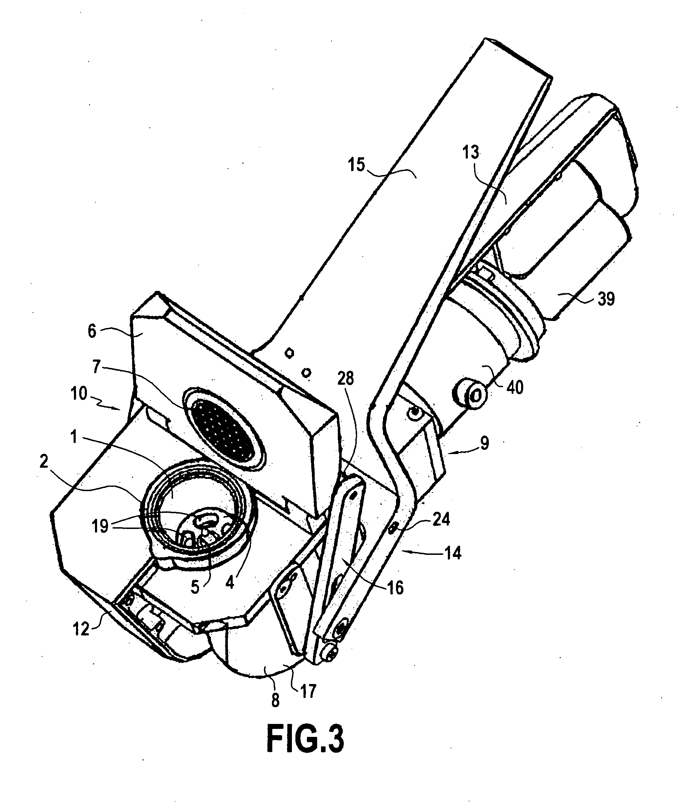

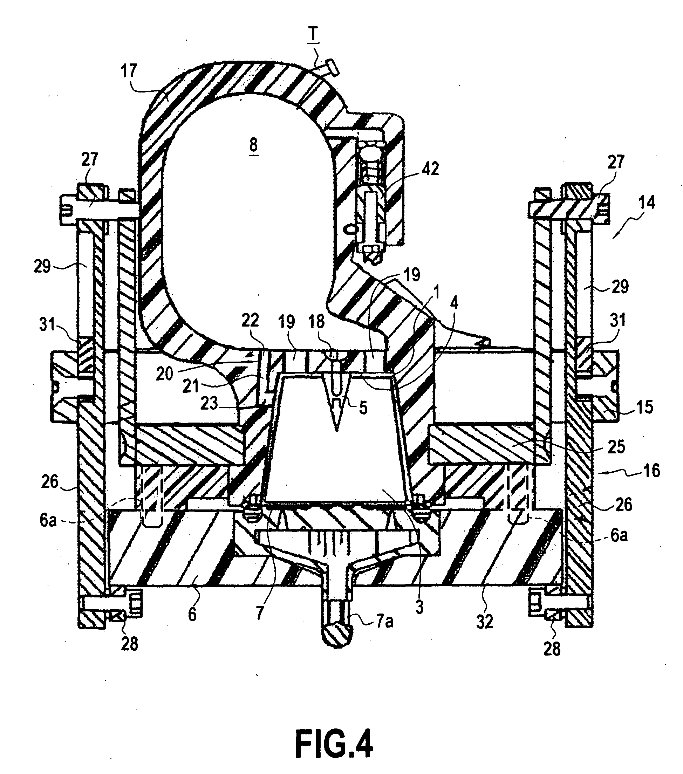

Comme on le voit mieux sur la figure 3, l'appareil comprend, dans un boîtier 10, une chambre d'infusion 1 présentant une ouverture 2 par laquelle est susceptible d'être introduite la charge de café ou thé ; présentement la charge 3 est représentée à la figure 4 par une capsule métallique de type courant.

La chambre 1 présente en son fond 4 une buse 5 d'amenée d'eau chaude, une pièce de fermeture 6 de ladite chambre présentant une grille de support 7 de diamètre sensiblement égal à celui de l'ouverture 2 et un orifice 7a d'écoulement de l'infusion préparée. Le boîtier 10 comprend en outre un réservoir d'eau 8 communiquant avec la buse 5, et un moyen de pompage 9 apte à faire délivrer, lors d'un cycle d'infusion, un certain volume d'eau, amené à une température d'infusion, du réservoir à ladite buse.

Un tel appareil est particulièrement adapté, en fonction du moyen de pompage choisi, à confectionner soit des infusions de café à basse pression, soit à haute pression aux environs de 8 bars pour obtenir un café du type espresso.

Pour amener l'eau à une température d'infusion, on peut envisager d'adjoindre au réservoir un chauffage électrique alimenté par un cordon électrique à une source de tension du genre réseau ou batterie.

La pièce de fermeture 6 est montée mobile par rapport à la chambre 1 et peut venir occuper deux positions ouverte et fermée correspondant respectivement au chargement-déchargement de la chambre et à la préparation de l'infusion. De manière connue en soi, l'étanchéité entre l'ouverture de la chambre et la pièce de fermeture est assurée par l'interposition d'un joint.

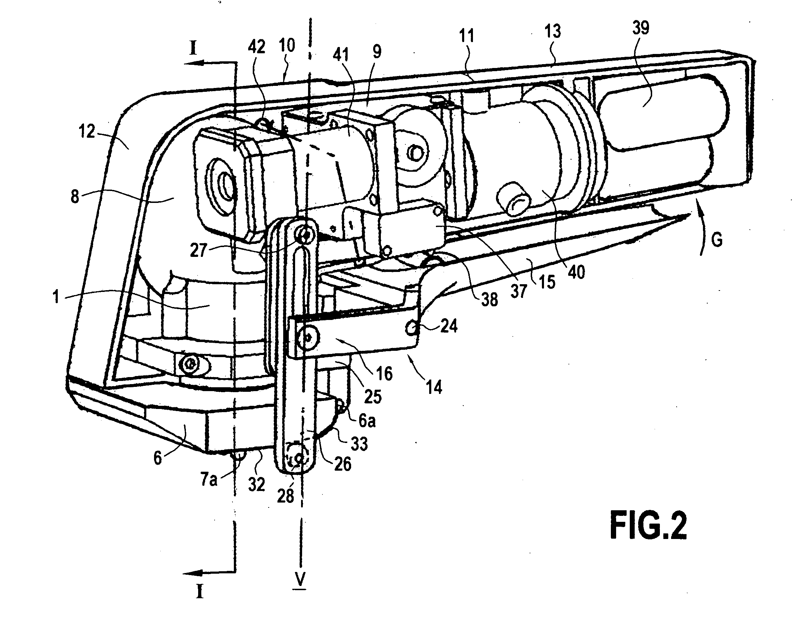

En se référant aux figures 1 et 2 et selon l'invention le boîtier 10 présente une structure portative comprenant une tête 12 renfermant au moins la chambre 1, un corps 11 comportant au moins un moyen de préhension 13 permettant de placer lors du cycle d'infusion, l'orifice d'écoulement 7a de la pièce de fermeture 6 vers le bas en direction d'une tasse de collecte de l'infusion, et un mécanisme de commande 14 permettant de placer la pièce de fermeture 6 en ses positions ouverte ou fermée.

Comme illustré, la structure portative du boîtier 10 présente une forme oblongue et ergonomique dans laquelle la tête 12, comporte, outre la chambre 1, le réservoir d'eau 8, et est disposée transversalement au corps 11 dont une partie constitue le moyen de préhension 13. Ce moyen de préhension est conformé de manière à être commodément saisi par une main d'un utilisateur et constitue ainsi une poignée.

Le corps 11 contient en grande partie le moyen de pompage 9.

Selon une autre caractéristique importante de l'invention, illustrée aux figures 1 et 2, la pièce de fermeture 6 est montée basculante autour d'un axe 6a transversal à la tête 12 et est reliée au mécanisme de commande 14 qui comporte une tringlerie 16 et un organe de manoeuvre 15 monté articulé sur le boîtier autour d'un axe 24 de manière à faire occuper à la pièce de fermeture, via la tringlerie, l'une ou l'autre de ses positions ouverte ou fermée.

Comme représentée sur les figures 3 et 4, la chambre 1 présente la forme d'un godet tronconique destiné à recevoir la charge 3 enfermée dans une dosette à paroi rigide métallique. Bien entendu, cette charge pourrait être réalisée en un filtre à paroi tissée.

Dans une réalisation préférée de l'invention et comme représenté sur les dessins, le réservoir d'eau 8 comporte une enveloppe 17 thermiquement isolante de manière à conserver l'eau chaude qui lui est amenée de l'extérieur à une température adaptée à la confection de l'infusion, préférentiellement choisie entre 80 et 100°C. Cette eau chaude peut provenir, par exemple, d'un robinet ou d'une bouilloire.

Afin de parfaire l'isolation thermique, l'enveloppe du réservoir et le boîtier sont réalisés en une seule pièce, de préférence, en matériau plastique d'épaisseur appropriée et pouvant supporter également en continu une pression de 7 à 8 bars en fonctionnement normal.

Afin de présenter un agencement équilibré des pièces internes, le réservoir est agencé au-dessus de la chambre dans la tête 12.

Dans l'exemple décrit sur les figures, le réservoir 8 présente une capacité d'environ 50 millilitres pratiquement égal à celle d'une tasse de café de type classique, comprise généralement entre 40 et 50 millilitres.

Comme représenté aux figures 3 et 4, et notamment à la figure 3 illustrant l'appareil en position retournée avec le moyen de fermeture 6 en position ouverte, et avec le réservoir d'eau 8 comportant une enveloppe fermée 17, la chambre 1 est reliée, non seulement, par sa buse 5 à une conduite 18 d'amenée d'eau, mais aussi à au moins un passage 19 de remplissage agencé au voisinage de la buse. Présentement, la chambre comporte quatre passages 19. En outre, le réservoir porte un moyen de mise à l'air libre 20 favorisant ainsi le remplissage en eau du réservoir.

Selon la réalisation de la figure 4, le moyen de mise à l'air libre 20 est constitué par un tube 21 dont l'embouchure 22 est située au niveau des entrées des passages 19, et débouche en 23 au niveau de la paroi latérale de la chambre 1.

Comme on le comprendra, le débouché 23 est obturé, lors du cycle d'infusion, par la paroi de la charge métallique 3.

On peut envisager comme variante (non représentée) au réservoir fermé, un réservoir d'eau formé par une enveloppe présentant en son sommet un orifice de remplissage adapté à être fermé par un bouchon monté de façon étanche sur cet orifice.

Selon une caractéristique importante de l'invention illustrée notamment à la figure 2 et dans le but d'offrir une grande solidité de construction et une sécurité pour l'usager lors de la préparation de l'infusion sous haute pression, l'axe de basculement 6a de la pièce de fermeture est monté sur un châssis 25 agencé dans le boîtier, et la tringlerie 16 comporte au moins une biellette 26 qui est montée en une de ses extrémités de façon pendulaire sur un pivot 27 fixé également sur le châssis 25 et dont l'autre extrémité comporte un doigt mobile 28 en prise avec la pièce de fermeture 6.

La biellette 26 est actionnée par l'organe de manoeuvre 15 de manière que le doigt 28 et le pivot 27 viennent , en la position fermée (figure 2), s'aligner sur un axe vertical V passant par un plan médian longitudinal de la chambre 1.

Cette construction avec un châssis du type autoporteur qui est réalisé préférentiellement en un matériau rigide et résistant aux contraintes mécaniques, par exemple en métal ou en plastique chargé de fibres, permet de réaliser un boîtier en un matériau plastique plus ordinaire ,léger et d'un coût de fabrication réduit. Dans la réalisation représentée sur les figures, et dans un but d'équilibrage des forces de contrainte mécanique exercées sur la pièce de fermeture, le mécanisme de commande est constitué de pièces agencées de façon symétrique de part et d'autre du boîtier 10.

Ainsi, comme on le voit mieux à la figure 4, l'organe de manoeuvre 15 présente la forme générale d'une fourche à deux dents dont le manche est monté articulé sur le boîtier autour de l'axe 24 et dont les dents sont disposées latéralement de part et d'autre de la tête 12 pou venir en prise avec la tringlerie 16 disposée latéralement de part et d'autre de la tête 12.

Pour simplifier la description, on décrira ci-après uniquement une moitié latérale du mécanisme de commande.

Ainsi, la biellette 26 présente dans sa longueur une lumière 29 longitudinale et est actionnée par l'organe de manoeuvre monté à cet effet articulée autour de l'axe 24 et dont l'extrémité d'une des dents porte l'ergot 31 qui vient en prise avec le bord interne de la lumière 29.

En se référant aux figures, on voit que le doigt mobile 28 vient en prise avec la paroi inférieure 32 du moyen de fermeture 6, cette dite paroi présentant une région en forme de came 33(figure 2) facilitant le déplacement dudit doigt et permettant le basculement brusque vers la position ouverte de la pièce de fermeture 6.

Le mouvement brusque de basculement peut être amplifié par un ressort, non représenté, agencé au niveau de l'axe 6a et en prise avec la tête 12 et ladite pièce de fermeture.

On comprendra qu'en partant de la position ouverte de la pièce de fermeture 6 (figure 1 ou 3), toute action sur l'organe de manoeuvre 15 dans une direction dite vers le boîtier (flèche G de la figure 1) entraînera le pivotement de la dent autour de l'axe 24 et donc le coulissement de l'ergot 31 dans la lumière 29.Au cours de ce mouvement la biellette 26 pivote sur son pivot 27 et entraîne le doigt 28 dans un mouvement circulaire pour le faire monter sur la came 33.Le doigt 28 continue sa course et entraîne consécutivement la pièce de fermeture vers sa position fermée jusqu'à obtenir une position de verrouillage en laquelle la biellette 26 maintient l'étanchéité entre l'ouverture de la chambre et cette pièce de fermeture.

Pour ouvrir la chambre ,on écarte (flèche F des figures 2 et 1) l'organe de manoeuvre vers l'extérieur, ce qui provoque le mouvement inverse du doigt en direction de la came jusqu'à obtenir le basculement de la pièce de fermeture autour de l'axe 6a en direction de la partie postérieure du corps 11 ménageant ainsi une large ouverture spatiale dans la région antérieure de la tête 12.

Afin de faciliter le mouvement de l'organe de manoeuvre 15, on peut adjoindre, de façon connue en soi, un ressort de rappel entre le boîtier et l'organe de manoeuvre.

En outre, grâce à cette tringlerie, on obtient une grande sécurité de fonctionnement lors de la préparation de l'infusion sous haute pression de l'ordre de 8 bars.

En effet, en position fermée (figures 2 et 4), la biellette 26 vient s'aligner pratiquement verticalement sur un axe vertical V.

Ainsi, la force de pression exercée par la charge de café et l'infusion sur la pièce de fermeture 6 est contrecarrée par les forces alignées de réaction des pivots 27 et des doigts 28. De ce fait, aucun effort dû à la pression n'est ressenti dans la poignée par l'utilisateur.

Selon un mode préféré de réalisation de l'invention, le moyen de pompage 9 comporte une pompe électrique du type à piston mobile, alimentée par une source de tension telle qu' un accumulateur électrique 39 agencé dans le corps 11 plutôt en sa partie postérieure.

La pompe électrique comprend un moteur basse tension 40 d'entraînement d'une boîte à piston 41 et est agencée longitudinalement dans le boîtier entre le réservoir 8 et l'accumulateur 39.

Dans une variante non représentée aux figures, l'accumulateur pourrait être remplacé par un cordon électrique apte à être relié au secteur ,mais cette réalisation est moins séduisante du fait de la perte d'autonomie de l'appareil.

Selon un mode préféré de réalisation de l'invention, le moyen de pompage 9, présentement la boîte à piston 36, est une pompe à air reliée directement au réservoir 8 par un tube T (figure 4) et adaptée à mettre sous pression ledit réservoir pour faire sortir l'eau chaude à une pression déterminée de l'ordre de 7 à 8 bars.

Pour commander la mise en marche du moteur et donc de la pompe, l'invention prévoit d'équiper l'appareil d'un interrupteur 37, pouvant notamment faire partie des moyens de pressurisation, dont la touche de commande 38 est actionnable par une région de l'organe de manoeuvre 15(Figure 2) lorsque ce dernier est amené dans sa course vers le boîtier après avoir manoeuvré le mécanisme de commande de la fermeture et du verrouillage de la pièce de fermeture 6.

On peut prévoir, dans une variante non illustrée sur les dessins, de remplacer cette pompe électrique par une cartouche de gaz sous pression comportant une valve actionnable par un dispositif de commande solidaire de l'organe de manoeuvre 15.

Selon une autre variante, ledit moyen de pompage peut comporter une pompe électrique à eau, interposée entre le réservoir 8 et la chambre 1.

Afin de garantir le bon fonctionnement de l'appareil, le réservoir d'eau 8 est équipé en outre d'une valve de sécurité 42 (schématisée à la figure 4) destinée à mettre à l'air libre ledit réservoir et pouvant occuper, soit un état libre en laquelle elle permet de mettre le réservoir à l'air libre, soit un état de fermeture sous contrainte en laquelle elle est maintenue (liaison schématisée en traits interrompus à la figure 2) par l'organe de manoeuvre 15 dans sa course précédant l'enclenchement de l'interrupteur 37 et n'autorise pas la mise à l'air libre, sauf en cas de surpression anormale.

Une telle vanne est du type classique à bille reposant sur un siège à l'encontre d'un ressort taré relié à un doigt de mise en contrainte du ressort et actionné par l'organe de manoeuvre.

Pour illustrer le fonctionnement de l'appareil en références aux dessins annexés, on considère que le boîtier 10 comprend le réservoir d'eau chaude 8 à enveloppe 17 fermée, la pompe électrique à air et la chambre 1 de réception d'une charge de café avec la pièce de fermeture montée pivotante sur la tête 12 et commandée par le mécanisme de commande 14.

Le procédé de réalisation d'infusion de café dans un mode dit espresso est mis en oeuvre selon les étapes suivantes.

En partant de la position ouverte de la pièce de fermeture 6 (figure 1), on saisit d'une seule main le moyen de préhension 13 constitué par une partie du corps 11 et formant poignée pour amener la chambre 1 avec son ouverture 2 tournée vers le haut en position illustrée à la figure3;
on remplit, par une source d'eau chaude extérieure à l'appareil, le réservoir 8 en versant par les passages 19 de l'eau préalablement chauffée à une température comprise entre 80 et 100°C;
on introduit dans la chambre d'infusion une charge de café en dosette ;
on actionne l'organe de manoeuvre 15, dans une première course montante (flèche G) vers le corps du boîtier, qui met en oeuvre la tringlerie 16 pour amener de façon étanche ladite pièce de fermeture 6 contre l'ouverture 2 ;
on retourne l'appareil par sa poignée 13 en faisant tourner dans sa main le corps 11 pour placer l'orifice d'écoulement 7a vers le bas au-dessus d'une tasse à café ;
on presse (flèche g) l'organe de manoeuvre vers le corps pour enclencher dans une seconde course montante le cycle d'infusion, ce qui s'effectue, d'une part, par la mise en état de fermeture sous contrainte de la valve de sécurité 42, et d'autre part, par la fermeture de l'interrupteur 37 de commande du moyen de pompage qui permet la pressurisation du réservoir et l'envoi de l'eau chaude sous pression dans la chambre 1 pour confectionner l'infusion ;
puis, dès que la tasse est remplie, on relâche l'organe de manoeuvre 15 ce qui provoque lors de sa course inverse vers l'extérieur (flèche F), d'abord, la relâche de la touche 38 et donc l'ouverture de l'interrupteur provoquant l'arrêt du moyen de pompage, puis la mise en l'état libre de la valve 42 permettant la purge de la pression du réservoir et donc l'équilibre des pressions au niveau de la chambre ;
enfin, en continuant la course inverse, vers l'extérieur, de l'organe de manoeuvre, on provoque le retrait des doigts 28 de la came 33 et consécutivement le basculement de la pièce de fermeture 6 en sa position ouverte de la figure 1.

D'autres variantes de réalisation de l'invention peuvent être envisagées sans sortir du cadre de l'invention.

Ainsi, on peut prévoir que le boîtier comportant le réservoir, la chambre et le moyen de pompage, la pièce de fermeture et le mécanisme de commande constituent un ensemble qui est monté amovible du boîtier et qui comportent à cet effet avec le boîtier des moyens d'enclenchement mutuels formés, par exemple, par une baïonnette à ergots et came.

## Revendications

1. Appareil destiné à confectionner une infusion comprenant
un réservoir d'eau (8) ;
un boîtier (10) comportant une chambre (1) présentant une buse (5) d'amenée d'eau chaude ainsi qu'une ouverture (2) par laquelle est susceptible d'être introduite une charge de produit à infuser ;
une pièce de fermeture (6) de ladite chambre montée mobile par rapport à ladite chambre et pouvant occuper deux positions ouverte ou fermée correspondant respectivement au chargement - déchargement de la dite chambre et à la préparation de l'infusion ;
des moyens (9) reliés au réservoir (8) pour délivrer lors d'un cycle d'infusion, un certain volume d'eau, amené à une température d'infusion dudit réservoir à ladite chambre ;
un orifice d'écoulement de l'infusion (7a) ;
**caractérisé en ce qu'**il consiste essentiellement en une structure portative comprenant une tête (12) renfermant au moins la chambre (1), un corps comportant au moins un moyen de préhension (13) permettant lors du cycle d'infusion, de déplacer l'appareil à la main pour placer l'orifice d'écoulement(7a) de la pièce de fermeture (6) vers le bas en direction d'une tasse de collecte de l'infusion.

2. Appareil selon la revendication 1, **caractérisé en ce que** ledit réservoir d'eau (8) fait partie de ladite tête.

3. Appareil selon la revendication 1 ou 2, **caractérisé en ce que** lesdits moyens reliés au réservoir pour délivrer lors d'un cycle d'infusion, un certain volume d'eau, amené à une température d'infusion dudit réservoir à ladite chambre, comportent des moyens de pressurisation, pour fournir l'eau dans la chambre à une pression déterminée.

4. Appareil selon l'une quelconque des revendications 1 à 3, **caractérisé en ce que** la structure portative du boîtier (10) présente une forme oblongue et ergonomique dans laquelle la tête (12), comportant la chambre (1) et. le réservoir d'eau (8), est disposée transversalement au corps (11) dont une partie constitue ledit au moins un moyen de préhension (13).

5. Appareil selon l'une quelconque des revendications 1 à 4, **caractérisé en ce qu'**il comporte en outre un mécanisme de commande (14) permettant de placer la pièce de fermeture (6) en ses positions ouverte ou fermée.

6. Appareil selon la revendication 5, **caractérisé en ce que** la pièce de fermeture (6) est montée basculante autour d'un axe (6a) transversal à la tête (12) et est reliée au mécanisme de commande (14) qui comporte une tringlerie(16) et un organe de manoeuvre (15) monté articulé sur le boîtier autour d'un axe(24), de manière à faire occuper à la pièce de fermeture, via la tringlerie, l'une ou l'autre de ses positions ouverte ou fermée.

7. Appareil selon la revendication 6, **caractérisé en ce que** l'axe (6a) de basculement de la pièce de fermeture est monté sur un châssis (25) agencé dans le boîtier, et la tringlerie (16) comporte au moins une biellette (26)qui est montée en une de ses extrémités de façon pendulaire sur un pivot (27) fixé sur ledit châssis et dont l'autre extrémité comporte un doigt mobile(28) en prise avec la pièce de fermeture (6); ladite biellette étant actionnée par l'organe de manoeuvre (15) de manière à ce que le doigt (28) et le pivot (27) viennent, en la position fermée ,s'aligner sur un axe vertical (V) passant par le plan médian longitudinal de la chambre (1).

8. Appareil selon la revendication 6 ou 7,**caractérisé en ce que** l'organe de manoeuvre (15) présente la forme d'une fourche à deux dents dont le manche est monté articulé sur le boîtier autour d'un axe (24) et dont les dents sont disposées latéralement de part et d'autre de la tête (12) et portent chacune un ergot (31), tandis que la tringlerie (16) comporte deux biellettes(26)disposées latéralement de part et d'autre de la tête et présentant chacune une lumière(29) de réception de l'un des ergots (31).

9. Appareil selon l'une quelconque des revendications 1 à 8,**caractérisé en ce que** le réservoir (8) présente une capacité pratiquement égale à celle d'une tasse à café de type classique.

10. Appareil selon l'une quelconque des revendications 1 à 9, **caractérisé en ce que** le réservoir d'eau(8) comporte une enveloppe(17) thermiquement isolante de manière à conserver l'eau chaude qui lui est amenée de l'extérieur à une température adaptée à la confection de l'infusion et **en ce que** e le boîtier (10) est réalisée d'une pièce avec l'enveloppe (17).

11. Appareil selon l'une quelconque des revendications 1 à 10, **caractérisé en ce que** le réservoir d'eau(8) comporte une enveloppe(17) fermée, que la chambre(1) est reliée au réservoir par la buse(5), et par au moins un passage(19) de remplissage agencé au voisinage de la buse, et **en ce que** le réservoir (8) comporte un moyen de mise à l'air libre (20).

12. Appareil selon l'une quelconque des revendications 1 à 11, **caractérisé en ce que** le réservoir d'eau est formé par une enveloppe présentant un orifice de remplissage susceptible d'être fermé par un bouchon monté de manière étanche sur cet orifice.

13. Appareil selon la revendication 3 et l'une quelconque des revendications 1 à 12, **caractérisé en ce que** lesdits moyens de pressurisation sont un moyen de pompage (9).

14. Appareil selon la revendication 13, **caractérisé en ce que** ledit moyen de pompage (9) est une pompe à air électrique alimentée par une source de tension électrique afin de mettre sous pression ledit réservoir.

15. Appareil selon la revendication 3 et l'une quelconque des revendications 1 à 14, **caractérisé en ce que** lesdits moyen de pressurisation (9) sont équipés en outre d'un interrupteur (37), et que le réservoir d'eau (8) est équipé en outre d'une valve de sécurité(42) destinée à mettre à l'air libre ledit réservoir et pouvant occuper, soit un état libre en laquelle elle permet de mettre le réservoir à l'air libre, soit un état de fermeture sous contrainte dans lequel elle n'autorise pas la mise à l'air libre, sauf en cas de surpression anormale.

16. Appareil selon la revendication 15, **caractérisé en ce que** ladite valve de sécurité(42) est maintenue dans ledit état de fermeture sous contrainte par l'organe de manoeuvre (15) dans sa course précédant l'enclenchement de l'interrupteur (37).

17. Appareil selon l'une quelconque des revendications 1 à 16,**caractérisé en ce que** la pièce de fermeture est montée amovible sur le boîtier (10) et comporte avec le boîtier des moyens d'enclenchement mutuel.

18. Appareil selon la revendication 3 et l'une quelconque des revendications 1 à 17, **caractérisé en ce que** lesdits moyens de pressurisation sont une cartouche de gaz reliée au réservoir (8) et comportent une valve actionnable par un dispositif de commande.

19. Appareil selon la revendication 13 et l'une quelconque des revendications 1 à 18, **caractérisé en ce que** ledit moyen de pompage (9) comporte une pompe électrique à eau interposée entre le réservoir (8) et la chambre (1).

20. Appareil selon la revendication 3 et l'une quelconque des revendications 1 à 19, **caractérisé en ce qu'**il comporte au moins un accumulateur (39) ou pile électrique pour l'alimentation desdits moyens de pressurisation.

21. Appareil selon la revendication 20, **caractérisé en ce que** ledit au moins un accumulateur (39) ou pile électrique est agencé dans ledit moyen de préhension (13).

22. Procédé de réalisation d'infusion, notamment de café, au moyen d'un appareil destiné à confectionner une infusion selon l'une quelconque des revendications 1 à 21, **caractérisé en ce que**
on ouvre la chambre (1) en agissant sur la pièce de fermeture(6) et on amène la chambre (1) à avoir son ouverture (2) tournée vers le haut ;
on remplit le réservoir d'eau (8) préalablement chauffée ;
on introduit dans la chambre d'infusion une charge de produit à infuser en poudre ou en dosette ;
on referme de façon étanche la chambre (1) avec la pièce de fermeture ;
on place l'orifice d'écoulement (7a) vers le bas au-dessus d'une tasse en retournant l'appareil par son moyen de préhension (13); on actionne lesdits moyens (9) reliés au réservoir (8) pour délivrer un certain volume d'eau, amené à une température d'infusion dudit réservoir à ladite chambre, ce qui entraine la confection de l'infusion, qui s'écoule à travers l'orifice d'écoulement(7a) de la pièce de fermeture (6) vers le bas en direction de ladite tasse ;
dès que la tasse est remplie,
on interrompt lesdits moyens (9) reliés au réservoir pour délivrer un certain volume d'eau; et
on ouvre la chambre en agissant sur la pièce de fermeture (6) afin de retirer la charge usagée.

23. Procédé de réalisation d'infusion selon la revendication 22, utilisant plus spécifiquement l'appareil destiné à confectionner une infusion selon la revendication 15 ou 16, **caractérisé en ce que** pour actionner lesdits moyens (9) reliés au réservoir (8) pour délivrer un certain volume d'eau, amené à une température d'infusion dudit réservoir à ladite chambre, on presse l'organe de manoeuvre (15) vers le corps (11) pour enclencher, d'une part, la valve de sécurité (42) en son état de fermeture sous contrainte, et d'autre part, l'interrupteur de commande (37) du moyen de pompage qui permet la pressurisation du réservoir et l'envoi de l'eau chaude sous pression dans la chambre (1) pour confectionner l'infusion ; et de plus,
pour interrompre lesdits moyens reliés au réservoir pour délivrer un certain volume d'eau, on relâche l'organe de manoeuvre ce qui provoque d'abord le déclenchement de l'ouverture de l'interrupteur(37) et donc l'arrêt du moyen de pompage ; et qui ensuite provoque la relâche de la valve (42) et la mise à l'air libre du réservoir.

24. Procédé de réalisation d'infusion selon la revendication 23, **caractérisé en ce que** pour ouvrir la chambre en agissant sur la pièce de fermeture, on continue la course inverse de l'organe de manoeuvre (15) vers l'extérieur pour procéder au basculement de la pièce de fermeture (6) et à l'ouverture de la chambre (1).

## Claims

1. An appliance for brewing an infusion, the appliance comprising:
a water tank (8);
a housing (10) including a chamber (1) presenting a hot water feed nozzle (5) and an opening (2) through which a fill of brew preparation can be inserted;
a closure part (6) for closing said chamber, mounted to move relative to said chamber, and capable of occupying an open position or a closed position, which positions correspond respectively to filling/emptying said chamber, and to brewing the infusion;
means (9) connected to the tank (8) to act during a brewing cycle to deliver a certain volume of water that has been raised to a brewing temperature from said tank to said chamber; and
a brew outflow orifice (7a);
the appliance being **characterized in that** it essentially consists in a portable structure comprising a head (12) containing at least the chamber (1), and a body including at least one handle means (13) enabling the appliance to be moved by hand so as to place the outflow orifice (7a) of the closure part (6), during the brewing cycle, to face down towards a cup for collecting the infusion.

2. An appliance according to claim 1, **characterized in that** said water tank (8) forms a portion of said head.

3. An appliance according to claim 1 or claim 2, **characterized in that** said means connected to the tank for acting during a brewing cycle to deliver a certain volume of water raised to a brewing temperature from said tank to said chamber comprise pressurizing means for delivering the water to the chamber at a determined pressure.

4. An appliance according to any one of claims 1 to 3, **characterized in that** the portable structure of the housing (10) presents an ergonomic oblong shape in which the head (12) including the chamber (1) and the water tank (8) is disposed transversely relative to the body (11), a portion of which constitutes said at least one handle means (13).

5. An appliance according to any one of claims 1 to 4, **characterized in that** it further includes one control mechanism (14) enabling the closure part (6) to be placed in its open or closed position.

6. An appliance according to claim 5, **characterized in that** the closure part (6) is mounted to tilt about a pin (6a) extending transversely relative to the head (12) and is connected to the control mechanism (14) that comprises a linkage (16) and a drive member (15) hinged to the housing about a pin (24), in such a manner as to cause the closure part to occupy one or the other of its open and its closed positions, by acting via the linkage.

7. An appliance according to claim 6, **characterized in that** the pivot pin (6a) of the closure part is mounted on a frame (25) arranged in the housing, and the linkage (16) comprises at least one link (26) that is mounted at one of its ends to swing from a pivot (27) fastened to said frame, and having its other end including a moving finger (28) in engagement with the closure part (6); said link being actuated by the drive member (15) in such a manner that the finger (28) and the pivot (27), in the closed position, come into alignment on a vertical axis (V) contained in the longitudinal midplane of the chamber (1).

8. An appliance according to claim 6 or claim 7, **characterized in that** the drive member (15) is in the form of a two-pronged fork with its handle hinged to the housing about a pin (24) and with its prongs disposed laterally on either side of the head (12), each carrying a stud (31), while the linkage (16) has two links (26) disposed laterally on either side of the head, each presenting a slot (29) for receiving a respective one of the studs (31).

9. An appliance according to any one of claims 1 to 8, **characterized in that** the tank (8) presents a capacity that is practically equal to the capacity of a coffee cup of conventional type.

10. An appliance according to any one of claims 1 to 9, **characterized in that** the water tank (8) comprises a thermally insulating shell (17) so as to keep hot the water that is fed thereto from the outside at a temperature that is appropriate for brewing the infusion, and **in that** the housing (10) is made integrally with the shell (17).

11. An appliance according to any one of claims 1 to 10, **characterized in that** the water tank (8) comprises a closed shell (17), the chamber (1) is connected to the tank by the nozzle (5), and via at least one filler passage (19) disposed in the vicinity of the nozzle, and **in that** the tank (8) includes vent means (20) for connection to the atmosphere.

12. An appliance according to any one of claims 1 to 11, **characterized in that** the water tank is constituted by a shell presenting a filler orifice suitable for being closed by a stopper mounted in sealed manner in said orifice.

13. An appliance according to claim 3 and any one of claims 1 to 12, **characterized in that** said pressurizing means are pump means (9).

14. An appliance according to claim 13, **characterized in that** said pump means (9) are constituted by an electrically-driven air pump powered by a source of electricity in order to pressurize said tank.

15. An appliance according to claim 3 and any one of claims 1 to 14, **characterized in that** said pressurizing means (9) are also provided with a switch (37), and **in that** the water tank (8) is also fitted with a safety valve (42) for venting said tank to the atmosphere and capable of occupying either a free state in which it enables the reservoir to be vented to the atmosphere, or a closed state under stress in which it does not allow venting to the atmosphere except in the event of abnormal excess pressure.

16. An appliance according to claim 15, **characterized in that** said safety valve (42) is held in the state in which it is closed under stress by the drive member (15) in its stroke prior to operating the switch (37).

17. An appliance according to any one of claims 1 to 16, **characterized in that** the closure part is movably mounted on the housing (10) and **in that** the closure part and the housing include mutual engagement means.

18. An appliance according to claim 3 and any one of claims 1 to 17, **characterized in that** said pressurization means comprise a gas cartridge connected to the tank (8) and include a valve that can be actuated by a control device.

19. An appliance according to claim 13 and any one of claims 1 to 18, **characterized in that** said pump means (9) comprise an electrically-driven water pump interposed between the tank (8) and the chamber (1).

20. An appliance according to claim 3 and any one of claims 1 to 19, **characterized in that** it includes at least one battery or rechargeable battery (39) for powering said pressurizing means.

21. An appliance according to claim 20, **characterized in that** said at least one battery (39) is arranged in said handle means (13).

22. A method of brewing an infusion, in particular of coffee, by means of an infusion-brewing appliance according to any one of claims 1 to 21, the method being **characterized by** the following steps:
opening the chamber (1) by acting on the closure part (6) and bringing the chamber (1) into a position such that its opening (2) faces upwards;
filling the tank (8) with already-heated water;
placing a fill of brew preparation in powder form or in a pack into the infusion chamber;
closing the chamber (1) in sealed manner using the closure part;
placing the outflow orifice (7a) facing downwards over a cup by turning the appliance over by means of its handle means (13);
actuating said means (9) connected to the tank (8) to cause a certain volume of water raised to a brewing temperature to be delivered from said tank to said chamber, thereby causing the infusion to be brewed and to flow out through the outflow orifice (7a) from the closure part (6) down towards said cup; and as soon as the cup is full, switching off said means (9) connected to the tank in order to deliver a certain volume of water; and
opening the chamber by acting on the closure part (6) in order to remove the used fill.

23. A method of brewing an infusion according to claim 22, making use more specifically of the infusion-brewing appliance according to claim 15 or claim 16, the method being **characterized by** the following steps:
in order to actuate said means (9) connected to the tank (8) to deliver a certain volume of water raised to a brewing temperature from said tank to said chamber, pressing the drive member (15) towards the body (11) so as firstly to engage the safety valve (42) in its state of being closed under stress, and secondly to engage the control switch (37) of the pump means so as to enable the tank to be pressurized and cause hot water under pressure to be sent into the chamber (1) in order to brew the infusion; and also
in order to interrupt said means connected to the tank for delivering a certain volume of water, the drive member is released causing firstly the switch (37) to be opened and thus the pump means to be stopped; and secondly causing the valve (42) to be released, and the tank to be vented to the atmosphere.

24. A method of brewing an infusion according to claim 23, **characterized in that** in order to open the chamber by acting on the closure part, the outward reverse stroke of the drive member (15) is continued so as to cause the closure part (6) to tilt and open the chamber (1).

## Patentansprüche

1. Gerät für die Zubereitung eines Aufgußgetränks, umfassend einen Wasserbehälter (8),
ein Gehäuse (10), das eine Kammer (1) umfaßt, die eine Düse (5) zum Zuführen von heißem Wasser sowie eine Öffnung (2) aufweist, über die eine Ladung eines aufzugießenden Produkts eingebracht werden kann,
ein Teil zum Verschließen (6) der Kammer, das gegenüber der Kammer beweglich angebracht ist und zwei Positionen, eine offene oder eine geschlossene, einnehmen kann, die dem Beladen - Entladen der Kammer bzw. dem Zubereiten des Aufgußgetränks entsprechen,
Mittel (9), die mit dem Behälter (8) verbunden sind, um während eines Aufgußzyklus eine auf eine Aufgußtemperatur gebrachte bestimmte Wassermenge aus dem Behälter an die Kammer zu liefern,
eine Auslauföffnung (7a) für das Aufgußgetränk,
**dadurch gekennzeichnet, daß** es im wesentlichen aus einer tragbaren Struktur besteht, umfassend einen Kopf (12), der wenigstens die Kammer (1) einschließt, einen Körper, der wenigstens ein Greifmittel (13) umfaßt, das ermöglicht, während des Aufgußzyklus das Gerät per Hand zu bewegen, um die Auslauföffnung (7a) des Verschlußteils (6) nach unten in Richtung einer Tasse zum Auffangen des Aufgußgetränks zu plazieren.

2. Gerät nach Anspruch 1, **dadurch gekennzeichnet, daß** der Wasserbehälter (8) zu dem Kopf gehört.

3. Gerät nach Anspruch 1 oder 2, **dadurch gekennzeichnet, daß** die Mittel, die mit dem Behälter verbunden sind, um während eines Aufgußzyklus eine auf eine Aufgußtemperatur gebrachte bestimmte Wassermenge aus dem Behälter an die Kammer zu liefern, Druckbeaufschlagungsmittel umfassen, um das Wasser unter einem bestimmten Druck in die Kammer zu liefern.

4. Gerät nach einem der Ansprüche 1 bis 3, **dadurch gekennzeichnet, daß** die tragbare Struktur des Gehäuses (10) eine langgestreckte und ergonomische Form aufweist, bei der der Kopf (12), welcher die Kammer (1) und den Wasserbehälter (8) umfaßt, quer zum Körper (11) angeordnet ist, wovon ein Teil das wenigstens eine Greifmittel (13) bildet.

5. Gerät nach einem der Ansprüche 1 bis 4, **dadurch gekennzeichnet, daß** es ferner einen Betätigungsmechanismus (14) umfaßt, der ermöglicht, das Verschlußteil (6) in seine geöffnete oder seine geschlossene Position zu bringen.

6. Gerät nach Anspruch 5, **dadurch gekennzeichnet, daß** das Verschlußteil (6) um eine zum Kopf (12) querverlaufende Achse (6a) schwenkbar angebracht und mit dem Betätigungsmechanismus (14) verbunden ist, der ein Gestänge (16) sowie ein Betätigungsorgan (15) umfaßt, das um eine Achse (24) an dem Gehäuse angelenkt ist, um das Verschlußteil über das Gestänge die eine oder die andere seiner Positionen, die geöffnete oder die geschlossene, einnehmen zu lassen.

7. Gerät nach Anspruch 6, **dadurch gekennzeichnet, daß** die Achse (6a) zum Verschwenken des Verschlußteils an einem in dem Gehäuse angeordneten Gestell (25) angebracht ist und daß das Gestänge (16) wenigstens einen Schwingarm (26) umfaßt, der an einem seiner Enden um einen an dem Gestell befestigten Drehzapfen (27) pendelnd angebracht ist und dessen anderes Ende einen mit dem Verschlußteil (6) in Eingriff befindlichen beweglichen Finger (28) umfaßt, wobei der Schwingarm durch das Betätigungsorgan (15) derart betätigt wird, daß sich der Finger (28) und der Drehzapfen (27) in der geschlossenen Position in einer durch die Mittellängsebene der Kammer (1) verlaufenden vertikalen Achse (V) ausrichten.

8. Gerät nach Anspruch 6 oder 7, **dadurch gekennzeichnet, daß** das Betätigungsorgan (15) die Form einer Gabel mit zwei Zinken aufweist, deren Griff um eine Achse (24) an dem Gehäuse angelenkt ist und deren Zinken seitlich auf beiden Seiten des Kopfes (12) angeordnet sind und jeweils einen Stift (31) tragen, während das Gestänge (16) zwei Schwingarme (26) umfaßt, die seitlich auf beiden Seiten des Kopfes angeordnet sind und jeweils ein Langloch (29) zur Aufnahme von einem der Stifte (31) aufweisen.

9. Gerät nach einem der Ansprüche 1 bis 8, **dadurch gekennzeichnet, daß** der Behälter (8) ein Fassungsvermögen aufweist, das praktisch gleich demjenigen einer Kaffeetasse herkömmlicher Art ist.

10. Gerät nach einem der Ansprüche 1 bis 9, **dadurch gekennzeichnet, daß** der Wasserbehälter (8) einen wärmeisolierenden Mantel (17) umfaßt, so daß das ihm von außen zugeführte heiße Wasser auf einer an die Zubereitung des Aufgußgetränks angepaßten Temperatur gehalten wird, und daß das Gehäuse (10) mit dem Mantel (17) einstückig ausgebildet ist.

11. Gerät nach einem der Ansprüche 1 bis 10, **dadurch gekennzeichnet, daß** der Wasserbehälter (8) einen geschlossenen Mantel (17) umfaßt, daß die Kammer (1) über die Düse (5) und über wenigstens einen Fülldurchlaß (19), der in der Nähe der Düse angeordnet ist, mit dem Behälter verbunden ist, und daß der Behälter (8) ein Entlüftungsmittel (20) umfaßt.

12. Gerät nach einem der Ansprüche 1 bis 11, **dadurch gekennzeichnet, daß** der Wasserbehälter von einem Mantel gebildet ist, der eine Einfüllöffnung aufweist, die geeignet ist, durch einen an dieser Öffnung dicht angebrachten Pfropfen verschlossen zu werden.

13. Gerät nach Anspruch 3 und einem der Ansprüche 1 bis 12, **dadurch gekennzeichnet, daß** die Druckbeaufschlagungsmittel ein Pumpmittel (9) sind.

14. Gerät nach Anspruch 13, **dadurch gekennzeichnet, daß** das Pumpmittel (9) eine über eine elektrische Spannungsquelle gespeiste elektrische Luftpumpe ist, um den Behälter unter Druck zu setzen.

15. Gerät nach Anspruch 3 und einem der Ansprüche 1 bis 14, **dadurch gekennzeichnet, daß** die Druckbeaufschlagungsmittel (9) ferner mit einem Schalter (37) versehen sind und daß der Wasserbehälter (8) ferner mit einem Sicherheitsventil (42) ausgestattet ist, das dazu bestimmt ist, den Behälter zu entlüften, und das entweder einen unbelasteten Zustand einnehmen kann, in dem es ermöglicht, den Behälter zu entlüften, oder einen Schließzustand unter Spannung, in dem es das Entlüften nicht zuläßt, außer im Fall eines anormalen Überdrucks.

16. Gerät nach Anspruch 15, **dadurch gekennzeichnet, daß** das Sicherheitsventil (42) durch das Betätigungsorgan (15) bei seinem dem Einschalten des Schalters (37) vorangehenden Hub in dem Spannungsschließzustand gehalten wird.

17. Gerät nach einem der Ansprüche 1 bis 16, **dadurch gekennzeichnet, daß** das Verschlußteil an dem Gehäuse (10) lösbar angebracht ist und mit dem Gehäuse Mittel zum gegenseitigen Verriegeln umfaßt.

18. Gerät nach Anspruch 3 und einem der Ansprüche 1 bis 17, **dadurch gekennzeichnet, daß** die Druckbeaufschlagungsmittel eine mit dem Behälter (8) verbundene Gaskartusche sind und ein über eine Betätigungsvorrichtung betätigbares Ventil umfassen.

19. Gerät nach Anspruch 13 und einem der Ansprüche 1 bis 18, **dadurch gekennzeichnet, daß** das Pumpmittel (9) eine zwischen dem Behälter (8) und der Kammer (1) zwischengeschaltete elektrische Wasserpumpe ist.

20. Gerät nach Anspruch 3 und einem der Ansprüche 1 bis 19, **dadurch gekennzeichnet, daß** es wenigstens eine(n) Akku (39) oder Batterie für die Versorgung der Druckbeaufschlagungsmittel umfaßt.

21. Gerät nach Anspruch 20, **dadurch gekennzeichnet, daß** der bzw. die wenigstens eine Akku (39) oder Batterie in dem Greifmittel (13) angeordnet ist.

22. Verfahren zur Herstellung eines Aufgußgetränks, insbesondere von Kaffee, mittels eines Gerätes für die Zubereitung eines Aufgußgetränks nach einem der Ansprüche 1 bis 21, **dadurch gekennzeichnet, daß**
die Kammer (1) durch Einwirken auf das Verschlußteil (6) geöffnet wird und die Kammer (1) so positioniert wird, daß ihre Öffnung (2) nach oben weist,
der Behälter (8) mit zuvor erhitztem Wasser gefüllt wird,
in die Aufgußkammer eine Ladung eines aufzugießenden Produkts in Pulver- oder in Padform eingebracht wird,
die Kammer (1) mit dem Verschlußteil wieder dicht verschlossen wird,
die Auslauföffnung (7a) durch Drehen des Gerätes über sein Greifmittel (13) nach unten über einer Tasse plaziert wird,
die Mittel (9), die mit dem Behälter (8) verbunden sind, um eine auf eine Aufgußtemperatur gebrachte bestimmte Wassermenge aus dem Behälter an die Kammer zu liefern, betätigt werden, was zur Zubereitung des Aufgußgetränks führt, das durch die Auslauföffnung (7a) des Verschlußteils (6) nach unten in Richtung der Tasse läuft,
sobald die Tasse gefüllt ist, die Mittel (9), die mit dem Behälter verbunden sind, um eine bestimmte Wassermenge zu liefern, unterbrochen werden und die Kammer durch Einwirken auf das Verschlußteil (6) geöffnet wird, um die verbrauchte Ladung herauszunehmen.

23. Verfahren zur Herstellung eines Aufgußgetränks nach Anspruch 22, das insbesondere das Gerät für die Zubereitung eines Aufgußgetränks nach Anspruch 15 oder 16 verwendet, **dadurch gekennzeichnet, daß**
zur Betätigung der Mittel (9), die mit dem Behälter (8) verbunden sind, um eine auf eine Aufgußtemperatur gebrachte bestimmte Wassermenge aus dem Behälter an die Kammer zu liefern, das Betätigungsorgan (15) in Richtung des Körpers (11) gedrückt wird, um einerseits das Sicherheitsventil (42) in seinen Spannungsschließzustand zu schalten und um andererseits den Schalter zum Betätigen (37) des Pumpmittels, das die Druckbeaufschlagung des Behälters und die Lieferung des unter Druck stehenden heißen Wassers in die Kammer (1) ermöglicht, um das Aufgußgetränk zuzubereiten, einzuschalten, und daß zudem,
zur Unterbrechung der Mittel, die mit dem Behälter verbunden sind, um eine bestimmte Wassermenge zu liefern, das Betätigungsorgan entlastet wird, was zunächst das Auslösen der Öffnung des Schalters (37) und demzufolge das Anhalten des Pumpmittels bewirkt und anschließend zum Entspannen des Ventils (42) sowie zum Entlüften des Behälters führt.

24. Verfahren zur Herstellung eines Aufgußgetränks nach Anspruch 23, **dadurch gekennzeichnet, daß** zum Öffnen der Kammer durch Einwirken auf das Verschlußteil der umgekehrte Hub des Betätigungsorgans (15) nach außen fortgesetzt wird, um das Verschlußteil (6) zu verschenken und die Kammer (1) zu öffnen.
